# EUROPEAN PATENT SPECIFICATION

(11) **EP 1 138 731 B1**
(45) Date of publication and mention of the grant of the patent: **12.01.2005**
(21) Application number: 99931567.4
(22) Date of filing: 27.07.1999
(51) Int. Cl.: C09D 163/00, C09D 133/08, C09D 175/00, G02B 5/20, G02B 1/10

(54) **COATING COMPOSITION**
BESCHICHTUNGSZUSAMMENSETZUNG
COMPOSITION DE REVETEMENT

(30) Priority: 26.08.1998 JP 24044898
(43) Date of publication of application: 04.10.2001
(73) Proprietor: Clariant Finance (BVI) Limited, Road Town, Tortola (VG)
(72) Inventor: HARADA, Takamasa Clariant (Japan) K.K., Ogasa-gun, Sizuoka 437-1496 (JP); SAKAMOTO, Katsuyuki Clariant (Japan) K.K., Ogasa-gun, Sizuoka 437-1496 (JP); KUDO, Takanori Clariant (Japan) K.K., Ogasa-gun, Sizuoka 437-1496 (JP)
(74) Representative: Hütter, Klaus, Dr.
(86) International application number: PCT/JP1999/004024
(87) International publication number: WO 2000/012639

(56) References cited:
- EP-A- 0 522 456
- EP-A- 0 851 297
- JP-A- 4 236 212
- JP-A- 7 126 892
- JP-A- 9 316 346
- JP-A- 11 133 595
- US-A- 4 853 433
- PATENT ABSTRACTS OF JAPAN vol. 010, no. 076 (P-440), 26 March 1986 (1986-03-26) & JP 60 216307 A (NIPPON GOSEI GOMU KK), 29 October 1985 (1985-10-29)
- PATENT ABSTRACTS OF JAPAN vol. 014, no. 456 (C-0765), 2 October 1990 (1990-10-02) & JP 02 180921 A (KANSAI PAINT CO LTD), 13 July 1990 (1990-07-13)

## Description

### BACKGROUND OF THE INVENTION

### Field of the Invention

The present invention relates to coating compositions useful for forming protective films with which smooth and transparent surfaces can be obtained. More particularly, the present invention relates to coating compositions useful for forming protective films on color filters that have been formed on top of glass or transparent materials.

### Background Art

In recent years, liquid crystal displays have been extensively used in audiovisual equipment, and electronic devices such as personal computers. In particular, the demand for color displays is now rapidly increasing because they are excellent in visibility and amount of information. To produce color displays, color filters in the shape of, for instance, mosaic or stripes are usually formed on transparent substrates such as glass by, for example, a dyeing, printing, pigment dispersing or electrodeposition process.

In general, these color filters are produced so that their thickness will become approximately 1 micron, where it is inevitable that the color filters have surface roughness in the submicron range. In color STN displays, this roughness affects the quality of display (unevenness in color, etc.). In order to eliminate unevenness in display, it is necessary to make the surface roughness of the color filters 0.1 microns or less. To obtain such even surfaces, thermosetting acrylic resins have conventionally been applied to the surfaces of the color filters.

Not only in liquid crystal display devices but also in charge coupled devices, the surfaces of color filters require protection. Protective films are herein needed to protect these color filters from severe conditions under which post-treatments are conducted, for example, from solvents, acidic or alkaline solutions, etc. that are used for dipping treatment, and from high-temperature heat that is generated while electrode layers are formed by sputtering. Such protective films are required to be smooth, strong, highly transparent, and excellent in resistance to heat and chemicals, that is, not undergoing change in color and quality for a long period of time. To meet these requirements, thermosetting resins including epoxy copolymers have so far been used.

Conventionally-known many coating compositions for forming protective films are of two-bottle type. In the case of two-bottle-type coating compositions, it is necessary to mix two liquids before use, and to immediately use the mixture once they are mixed. In addition, the coating compositions can produce, depending on their compositions, sublimates while they are hardening; the sublimates are crystallized to give foreign particles, and these foreign particles can cause troubles during the production of liquid crystal panels. There have therefore been demanded coating compositions that never give crystallized materials.

Japanese Patent Laid-Open Publication No. 216307/1985 describes protective films made from glycidyl acrylate and polyhydric carboxylic anhydrides or acids. Agents for forming these protective films can be obtained as either one-bottle- or two-bottle-type coating compositions. In general, one-bottle-type coating compositions are easy for use, but poor in storage stability. The above one-bottle-type coating compositions hardened and became unusable within about 1 month. It was also confirmed that films made from these one-bottle-type coating compositions were poor in adhesion, transparency and evenness as compared with films made from the two-bottle-type coating compositions. On the other hand, coating compositions of two-bottle type are, in general, excellent in storage stability, and can provide films having excellent adhesion and high transparency; however, it is necessary to mix two liquids before use, and the two liquids rapidly reacts with each other once mixed. In the case of the above two-bottle-type coating compositions, it was necessary to use the mixture within 2 days after mixing two liquids.

### SUMMARY OF THE INVENTION

We now found that coating compositions having high storage stability, capable of providing excellent protective films can be obtained by the combination use of specific polymers and crosslinking agents, and accomplished the present invention on the basis of this finding.

An object of the present invention is therefore to provide coating compositions that are essentially stable and that can provide excellent protective films.

Another object of the present invention is to provide one-bottle-type coating compositions that are easy for use, that are excellent in storage stability, and that can provide protective films excellent in adhesion, transparency and evenness.

A coating composition according to claim 1 is claimed.

### DETAILED DESCRIPTION OF THE INVENTION

A coating composition according to the present invention contains at least (A) a polymer, (B) a crosslinking agent, (C) a reaction accelerator, and (D) a solvent.

### (A) Polymer

In the present invention, the polymer (A) is defined as a polymer containing carboxyl group, having a weight-average molecular weight, calculated in terms of styrene, of 5,000 to 200,000, an acid value KOH of 10 to 200 mg/g, and a glass transition temperature of 50 to 250°C. In a preferred embodiment of the present invention, the polymer has a weight-average molecular weight of approximately 10,000 to 100,000, and an acid value KOH of about 30 to 100 mg/g.

Further, in a preferred embodiment of the present invention, the polymer can be dissolved or, at least, swelled in aqueous alkaline solutions.

Preferable examples of such polymers are copolymers of acrylic or methacrylic esters and aromatic vinyl compounds. Examples of acrylic or methacrylic esters include methyl acrylate, methyl methacrylate, ethyl acrylate, ethyl methacrylate, butyl acrylate, butyl methacrylate, ethylhexyl methacrylate and phenyl acrylate. Examples of aromatic vinyl compounds include styrene, α-methylstyrene and *p*-methylstyrene.

These copolymers may be of any type; they may be any of random copolymers produced by addition polymerization, block copolymers, and the like. Further, there is no particular limitation on the copolymerization process, and any one of solution polymerization process, emulsion polymerization process, and the like can be adopted to produce the copolymers.

The amount of the polymer to be used in the present invention may be properly established so that excellent protective films can be obtained. However, the amount of the polymer to be used is preferably about 5 to 30% by weight, more preferably about 10 to 25% by weight of the coating composition.

### (B) Crosslinking Agent

In the present invention, the crosslinking agent is at least one of bisphenol acetone diglycidyl ether, triglycidyl isocyanurate, tetraglycidyldiaminodiphenylene, tetraglycidyl-*m*-xylenediamine, tetraglycidyl-1,3-bis(aminoethyl)cyclohexane, tetraphenyl-glycidyl ether ethane, triphenylglycidyl ether ethane, bisphenol hexafluoro-acetodiglycidyl ether, 1,3-bis(1-(2,3-epoxypropoxy)-1-trifluoromethyl-2,2,2-trifluoromethyl)benzene, 4,4-bis(2,3-epoxypropoxy)octafluorobiphenyl, triglycidyl-*p*-aminophenol, tetraglycidyl-*m*-xylenediamine, 2-(4-(2,3-epoxypropoxy)phenyl)-2-(4-(1,1-bis(4-(2,3-epoxypropoxy)phenyl)ethyl)phenyl)-propane, and 1,3-bis(4-(1-(4-(2,3-epoxypropoxy)phenyl)-1-(4-(1-(4-(2,3-epoxypropoxyphenyl)-1-methylethyl)phenyl)ethyl)phenoxy)-2-propanol.

In the present invention, the crosslinking agent may be used in any amount. It is however preferable to use the crosslinking agent in an amount of about 1 to 50 parts by weight, more preferably 5 to 30 parts by weight for 100 parts by weight of the polymer.

### (C) Reaction Accelerator

In the present invention, any compound can be used as the reaction accelerator as long as it accelerates the reaction between the carboxyl group contained in the polymer and the epoxide group contained in the crosslinking agent. In one embodiment of the present invention, an isocyanate or amine compound is preferably used as the reaction accelerator; and a blocked isocyanate, tertiary amine or blocked amine compound is more preferably used. Preferable examples of blocked isocyanates include hexamethylenediisocyanate blocked by phenol. Preferable examples of tertiary amines include triethanolamine. Preferable examples of blocked amines include hexamethylenediamine carbamate. The amount of the reaction accelerator to be added is preferably about 0.1 to 10 parts by weight for 100 parts by weight of the polymer.

### (D) Solvent

In the present invention, an organic solvent is used to dissolve therein the above-described polymer and crosslinking agent. In a preferred embodiment of the present invention, the organic solvent is selected from the group consisting of propylene glycol-based, ethylene glycol-based, lactic acid-based, butyric acid-based, acetic acid-based, formic acid-based, and γ-butyrolactone solvents, and mixtures thereof. When any of these organic solvents is used, the resulting coating composition is stable over approximately 6 months after preparation, and can provide a uniform coating film having no unevenness in coating. It is thus possible to obtain protective films that are excellent in adhesion, evenness, transparency, durability, and resistance to abrasion, stains and chemicals.

Specific examples of the organic solvent for use in the present invention include glycol ether and acetate-based solvents such as propylene glycol methyl ether, propylene glycol ethyl ether, propylene glycol propyl ether, propylene glycol *t*-butyl ether, dipropylene glycol methyl ether, dipropylene glycol propyl ether, tripropylene glycol methyl ether, propylene glycol methyl ether acetate, dipropylene glycol methyl ether acetate, ethylene glycol ethyl ether, ethylene glycol methyl ether, ethylene glycol butyl ether, ethylene glycol isopropyl ether, ethylene glycol *n*-butyl ether, cellosolve acetate, methyl cellosolve acetate, ethyl cellosolve acetate, diethylene glycol methyl ether, diethylene glycol ethyl ether, diethylene glycol butyl ether, diethylene glycol dimethyl ether, diethylene glycol diethyl ether, diethylene glycol monoacetate, diethylene glycol monoethyl ether acetate, propylene glycol phenyl ether, propylene glycol ethyl ether acetate, triethylene glycol butyl ether, 3-methyl-3-methoxybutyl acetate, and 3-methyl-3-methoxybutanol; lactic acid-based solvents such as ethyl lactate, methyl lactate, butyl lactate and pentyl lactate; acetic acid-based solvents such as butyl acetate, amyl formate, isoamyl acetate, isobutyl acetate, methoxybutyl acetate, and butyl propionate; and butyric acid-based solvents such as isobutyl butyrate, butyl butyrate and ethyl pyruvate.

In a preferred embodiment of the present invention, propylene glycol methyl ether acetate, or an organic solvent mixture consisting of propylene glycol methyl ether acetate and other organic solvents is used as the organic solvent. Preferable examples of organic solvents that can be used together with propylene glycol methyl ether acetate include propylene glycol-based, ethylene glycol-based, lactic acid-based, butyric acid-based, acetic acid-based, formic acid-based, and γ-butyrolactone solvents, and mixtures thereof.

The amount of the organic solvent to be used may properly be adjusted depending upon the concentration of the polymer, crosslinking agent and reaction accelerator in the coating composition; for example, this amount is about 45 to 95% by weight of the coating composition.

### Formation of Protective Film

The coating composition according to the present invention is applied to a substrate to form thereon a protective film. Therefore, in another aspect of the present invention, a process for producing a substrate comprising a protective film is provided. This process comprises applying the coating composition of the present invention to a substrate to form thereon a protective film. A further aspect of the present invention relates to the use of the coating composition of the present invention for the production of a substrate comprising a protective film.

Non-limitative examples of substrates to which the coating composition of the present invention can be applied include color filters, glass, glass filters, black matrixes, and substrates made from a variety of polymers (polyimide, polyamide, polyethylene, acrylic resins, etc.), indium titanium oxide, silicon nitride, metallic oxides (titanium oxide, silicon oxide, chrome oxide, etc.), or metals (aluminum, copper, etc.).

The substrate covered with a protective film made from the coating composition of the present invention can be used, for instance, semiconductors, flat panel displays, and electronic devices.

To form the protective film, the coating composition according to the present invention is applied to the above-described substrate, and then hardened by heating.

Any coating method can be adopted to apply the coating composition of the invention; and a spin, roll or spray coating method, for instance, can be employed. A spin coating method is, above all, preferred because a uniform film can readily be obtained by this method.

The conditions under which the coating composition applied is hardened may properly be established by taking the type of the polymer, the composition of the coating composition, etc. into consideration. For instance, the coating composition applied may be hardened at a temperature of 150 to 270°C for a time period of about 20 minutes to 10 hours.

### EXAMPLES

The present invention will now be explained more specifically by referring to the following examples. However, the present invention is not limited to or limited by these examples in any way.

### (a) Preparation of Coating Composition

A coating composition was prepared in the following manner. First of all, a first mixture was obtained by mixing the below-described polymer, crosslinking agent, and reaction accelerator. To this mixture was added a mixture of solvents, the mixing ratio by weight of the solvents being as shown below, thereby obtaining a coating composition containing 17% by weight of the first mixture.

### Example 1

| | |
|---|---|
| Polymer I (methacrylic acid-styrene copolymer, weight-average molecular weight: approx. 15,000, acid value: 55 mg/g) | 89 g |
| Triphenylglycidyl ether ethane | 10 g |
| Blocked hexamethylenediisocyanate | 1 g |
| Propylene glycol methyl ether acetate | 50% |
| Ethylene glycol monoethyl ether acetate | 50% |

### Example 2

| | |
|---|---|
| Polymer I | 89 g |
| Triphenylglycidyl ether ethane | 10 g |
| Blocked hexamethylenediisocyanate | 1 g |
| Propylene glycol methyl ether acetate | 50% |
| Diethylene glycol monoethyl ether | 50% |

### Example 3

| | |
|---|---|
| Polymer I | 89 g |
| 2-(4-(2,3-Epoxypropoxy)phenyl)-2- (4-(1,1-bis (4- (2, 3-epoxypropoxy)-phenyl)ethyl)phenyl)propane | 10 g |
| Blocked hexamethylenediisocyanate | 1 g |
| Propylene glycol methyl ether acetate | 50% |
| Ethylene glycol monoethyl ether acetate | 50% |

### Example 4

| | |
|---|---|
| Polymer I | 89 g |
| 2-(4-(2,3-Epoxypropoxy)phenyl)-2-(4-(1,1-bis(4-(2,3-epoxypropoxy)-phenyl)ethyl)phenyl)propane | 10 g |
| Blocked hexamethylenediisocyanate | 1 g |
| Propylene glycol methyl ether acetate | 50% |
| Diethylene glycol monoethyl ether | 50% |

### Example 5

| | |
|---|---|
| Polymer I | 89 g |
| 1,3-bis(4-1-(4-(2,3-epoxypropoxy)phenyl)-1-(4-(1-(4-(2,3-epoxypropoxyphenyl)-1-methylethyl)phenyl)ethyl)phenoxy)-2-propanol | 10 g |
| Blocked hexamethylenediisocyanate | 1 g |
| Propylene glycol methyl ether acetate | 50% |
| Ethylene glycol monoethyl ether acetate | 50% |

### Example 6

| | |
|---|---|
| Polymer I | 89 g |
| 1,3-bis(4-(1-(4-(2,3-epoxypropoxy)phenyl)-1-(4-(1-(4-(2,3-epoxypropoxyphenyl)-1-methylethyl)phenyl)ethyl)phenoxy)-2-propanol | 10 g |
| Blocked hexamethylenediisocyanate | 1 g |
| Propylene glycol methyl ether acetate | 50% |
| Diethylene glycol monoethyl ether | 50% |

### Examples 7

| | |
|---|---|
| Polymer I | 89 g |
| 1,3-bis(1-(2,3-epoxypropoxy)-1-trifluoromethyl-2,2,2-trifluoromethyl)benzene | 10 g |
| Blocked hexamethylenediisocyanate | 1 g |
| Propylene glycol methyl ether acetate | 50% |
| Ethylene glycol monoethyl ether acetate | 50% |

### Example 8

| | |
|---|---|
| Polymer I | 89 g |
| 1,3-bis-(1-(2,3-epoxypropoxy)-1-trifluoromethyl-2,2,2-trifluoromethyl)benzene | 10 g |
| Blocked hexamethylenediisocyanate | 1 g |
| Propylene glycol methyl ether acetate | 50% |
| Diethylene glycol monoethyl ether | 50% |

### Example 9

| | |
|---|---|
| Polymer II | 89 g |
| (methacrylic acid-styrene copolymer, weight-average molecular weight: 41,000, acid value: 85 mg/g) 1,3-bis(4-(1-(4-(2,3-epoxypropoxy)phenyl)-1-(4-(1-(4-(2,3-epoxypropoxyphenyl)-1-methylethyl)phenyl)ethyl)phenoxy)-2-propanol | 10 g |
| Blocked hexamethylenediisocyanate | 1 g |
| Propylene glycol methyl ether acetate | 50% |
| Diethylene glycol monoethyl ether | 50% |

### Example 10

| | |
|---|---|
| Polymer II | 89 g |
| 1,3-bis(1-(2,3-epoxypropoxy)-1-trifluoromethyl-2,2,2-trifluoromethyl)benzene | 10 g |
| Propylene glycol methyl ether acetate | 50% |
| Ethylene glycol monoethyl ether acetate | 50% |

### (b) Formation of Protective Film

A 1.2-µm color filter serving as a substrate was spin-coated with the above-obtained coating composition at a rotational speed of 1,000 rpm/5 seconds, and placed on a hot plate at 110°C for 1 minute for drying. The coating composition thus dried was then subjected to thermal hardening at a temperature of 250°C for 1 hour on a hot plate.

### (c) Tests for Evaluating the Properties of Protective Film

The above-obtained protective film was subjected to the following evaluation tests.

### Evaluation 1: Evenness

The thickness of the protective film was measured to determine the average film thickness, and the standard deviation of film thickness.

### Evaluation 2: Adhesion

The substrate covered with the protective film was left in a high-temperature (80°C) high-humidity (95 RH%) environment for 100 hours. The substrate was then withdrawn from this environment, and square notches were made on the protective film with a knife. A peeling test using an adhesive tape was conducted on this notched protective film.

### Evaluation 3: Measurement of Transmittance

The transmittance of the protective film was measured by a conventional method.

### Evaluation 4: Abrasion Resistance

The hardness of the protective film was measured by means of a pencil hardness tester that meets the JIS requirements.

### Evaluation 5: Chemical Resistance

1-mm square notches were made on the protective film formed on the substrate. This substrate was immersed in NMP (n-methylpyrrolidone) or acetone for 1 hour, and the conditions of the protective film were visually observed.

The results of the above-described evaluation tests were as shown in the following table.

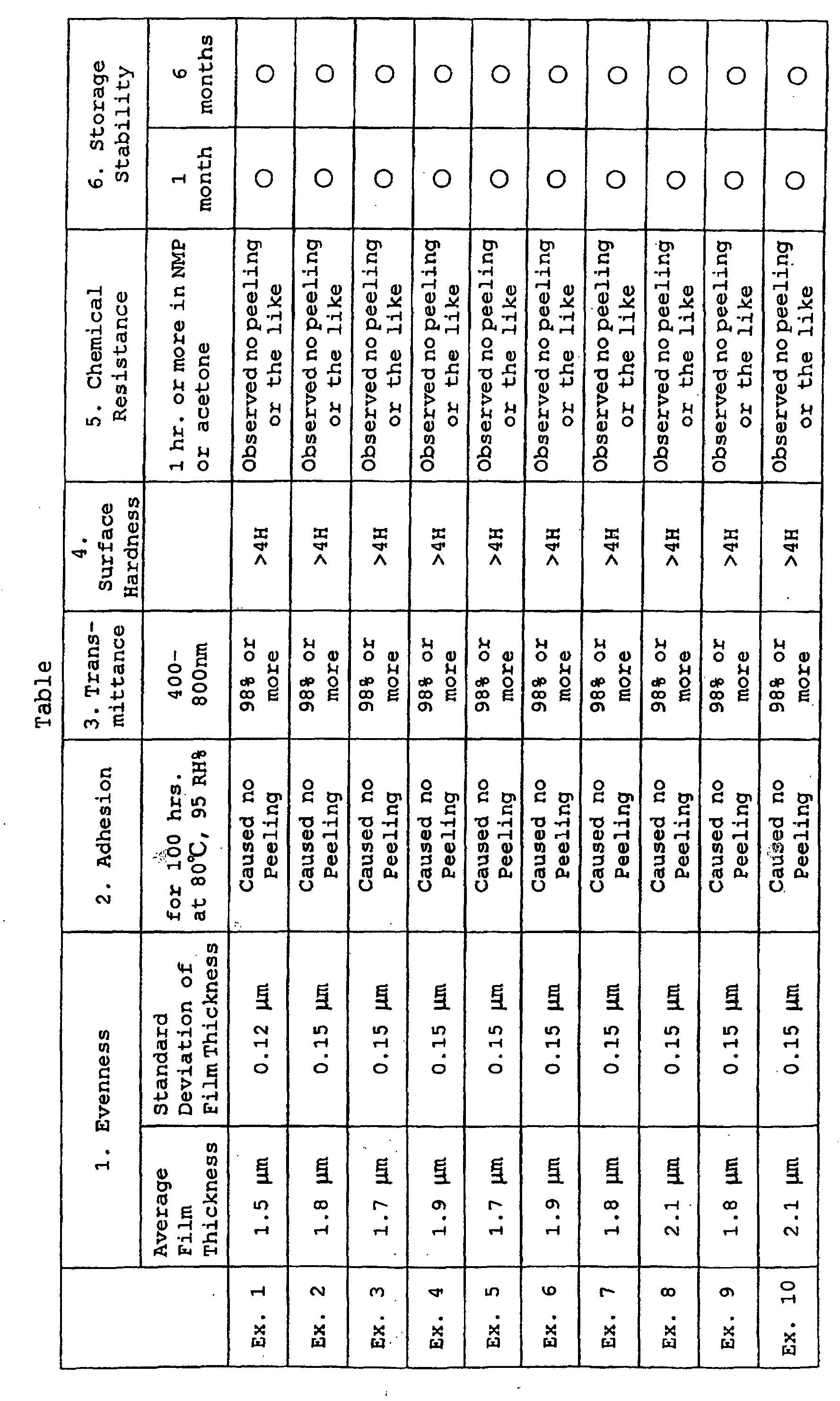

## Claims

1. A coating composition, comprising at least:
(a) at least one polymer having a weight-average molecular weight of 5,000 to 200,000reduced to that of styrene, a KOH acid value of 10 to 200 mg/g, and a glass transition point of 50 °C to 250 °C, and containing a carboxyl group;
(b) a multifunctional epoxide compound, as a crosslinker, containing at least two epoxy groups and at least one benzene ring or heterocycle which is at least one selected from the group consisting of bisphenol acetone diglycidyl ether, triglycidyl isocyanurate, tetraglycidyldiaminodiphenylene, tetraglycidyl-m-xylenediamine, tetraglycidyl-1,3-bis(aminoethyl)cyclohexane, tetraphenyl-glycidyl ether ethane, triphenylglycidyl ether ethane, bisphenol hexafluoro-acetodiglycidyl ether, 1,3-bis(1-(2,3-epoxypropoxy)-1-trifluoromethyl-2.2.2-trifluoromethyl)benzene. 4.4-bis(2.3-epoxypropoxy)octafluorobiphenyl, triglycidyl-p-aminophenol, tetraglycidyl-m-xylenediamine, 2-(4-(2,3-epoxypropoxy)phenyl-2-(4-(1,1-bis(4-(2,3-epoxypropoxy)-phenyl)ethyl)phenyl)-propane, and 1,3-bis(4-(1-(4-(2,3-epoxypropoxy)phenyl)-1-(4-(1-(4-(2,3-epoxypropoxyphenyl)-1-methylethyl)-phenyl)-ethyl) phenoxy)-2-propanol;
(c) a reaction accelerator selected from the group consisting of a blocked isocyanate derivative, a tertiary amine and a blocked amine; and
(d) an organic solvent.

2. A coating composition according to claim 1, wherein the polymer is a copolymer of an acrylate or methacrylate ester and an aromatic vinyl compound.

3. A coating composition according to claim 1, wherein the epoxide compound contains at least three epoxide groups.

4. A coating composition according to claim 1, wherein the reaction accelerator is an isocyanate derivative or an amine derivative.

5. A coating composition according to claim 1, wherein the organic solvent is selected from the group consisting of propylene glycols, ethylene glycols, lactic acids, butyric acids, acetic acids, formic acids, γ-butyrolactones and mixtures thereof.

6. A coating composition according to claim 1, wherein the organic solvent is propylene glycol methyl ether acetate or a mixture of propylene glycol methyl ether acetate and one or more other organic solvent.

7. A coating composition according to claim 1, wherein the organic solvent is a mixture of propylene glycol methyl ether acetate and an organic solventselected from the group consisting of propylene glycols other than propylene glycol methyl ether acetate, ethylene glycols, lactic acids, butyric acids, acetic acids, formic acids, γ-butyrolactones and mixtures thereof.

8. The use of a coating composition as claimed in any of claims 1 to 8 as a protective layer in a color filter.

## Patentansprüche

1. Eine Beschichtungszubereitung, die mindestens besteht aus
(a) mindestens einem Polymer mit einer massegemittelten Molekülmasse von 5 000 bis 200000, reduziert auf die massegemittelte Molekülmasse von Styrol, einer KOH-Säurezahl von 10 bis 200 mg/g und einer Glasübergangstemperatur von 50°C bis 250°C, das eine Carboxylgruppe enthält;
(b) einer multifunktionellen Epoxidverbindung als Vernetzungsmittel, die mindestens zwei Epoxidgruppen und mindestens einen Benzolring oder mindestens einen Heterocyclus enthält, welche mindestens eine aus einer Gruppe gewählte Verbindung ist, die aus Bisphenolacetondiglycidylether, Triglycidylisocyanurat, Tetraglycidyldiaminodiphenylen, Tetraglycidyl-m-xylendiamin, Tetraglycidyl-1,3-bis(aminoethyl)-cyclohexan, Tetraphenylplycidyletherethan, Triphenylglycidyletherethan, Bisphenolhexafluoracetodiglycidylether, 1,3-Bis(1-(2,3-epoxypropoxy)-1-trifluormethyl-2,2,2-trifluormethyl)benzol, 4,4-Bis(2,3-epoxypropoxy)octafluorbiphenyl, Triglycidyl-paminophenol, Tetraglycidyl-m-xylendiamin, 2-(4-(2,3-Epoxypropoxy)phenyl-2-(4-(1,1-bis(4-(2,3-epoxypropoxy)-pheny)ethyl)phenyl)-propan und 1,3-Bis(4-(1-(4-(2,3-epoxypropoxy)phenyl)-1-(4-(1-(4-(2,3-epoxypropoxyphenyl)-1-methylethyl)-phenyl)-ethyl)phenoxy)-2-propanol besteht;
(c) einem Reaktionsbeschleuniger, der aus einer Gruppe gewählt wird, welche aus einem blockierten Isocyanatderivat, einem tertiären Amin und einem blockierten Amin besteht; und
(d) einem organischen Lösungsmittel.

2. Beschichtungszubereitung gemäß Anspruch 1, wobei das Polymer ein Copolymer eines Acrylat- oder Methacrylatesters und einer aromatischen Vinylverbindung ist.

3. Beschichtungszubereitung gemäß Anspruch 1, wobei die Epoxidverbindung mindestens drei Epoxidgruppen enthält.

4. Beschichtungszubereitung gemäß Anspruch 1, wobei der Reaktionsbeschleuniger ein Isocyanatderivat oder ein Aminderivat ist.

5. Beschichtungszubereitung gemäß Anspruch 1, wobei das organische Lösungsmittel aus einer Gruppe gewählt wird, die aus Propylenglycolen, Ethylenglycolen, Milchsäuren, Buttersäuren, Essigsäuren, Ameisensäuren, γ-Butyrolactonen und aus Gemischen dieser Substanzen besteht.

6. Beschichtungszubereitung gemäß Anspruch 1, wobei das organische Lösungsmittel Propylenglycolmethyletheracetat oder ein Gemisch von Propylenglycolmethyletheracetat und einem oder mehreren anderen organischen Lösungsmitteln ist.

7. Beschichtungszubereitung gemäß Anspruch 1, wobei das organische Lösungsmittel ein Gemisch aus Propylenglycolmethyletheracetat und einem organischen Lösungsmittel ist, welches aus einer Gruppe gewählt wird, die aus anderen Propylenglycolen als Propylenglycolmethyletheracetat sowie aus Ethylenglycolen, Milchsäuren, Buttersäuren, Essigsäuren, Ameisensäuren, γ-Butyrolactonen und aus Gemischen dieser Substanzen besteht.

8. Verwendung der Beschichtungszubereitung gemäß einem der Ansprüche 1 bis 8 als Schutzschicht in einem Farbfilter.

## Revendications

1. Composition de revêtement, comprenant au moins :
(a) au moins un polymère présentant une masse moléculaire moyenne en poids de 5,000 à 200,000 réduite à celle du styrène, un indice d'acide KOH de 10 à 200 mg/g, et un point de transition vitreuse de 50°C à 250°C, et présentant un groupe carboxyle ;
b) un composé époxyde multifunctionnel en tant qu' agent de réticulation, présentant au moins deux groupes époxy et au moins un cycle benzènique ou un hétérocycle qui est au moins un choisi dans le groupe constitué par l'éther acétonediglycidylique et de bisphénol, l'isocyanurate triglycidylique, le tétraglycidyldiamino-diphénylène, la tétraglycidyl-m-xylènediamine, le tétraglycidyl-1,3-bis(aminoéthyl)-cyclohexane, l'éther tétraphénylglycidylique d'éthane, l'éther triphénylglycidylique d'éthane, l'éther hexafluoroacétodiglycidylique et de bisphénol, le 1,3-bis-(1-(2,3-époxypropoxy)-1-trifluorométhyl-2,2,2-trifluorométhyl)-benzène, le 4,4-bis(2,3-époxypropoxy)octafluoro-biphényle, le triglycidyl-p-aminophénol, le tétraglycidyl-m-xylènediamine, le 2-(4-(2,3-époxypropoxy)-phényl-2-(4-(1,1-bis(4-(2,3-époxypropoxy)-phényl)éthyl)phényl)-propane et le 1,3-bis(4-(1-(4-(2,3-époxypropoxy)phényl)-1-(4-(1-(4-(2,3-époxypropoxyphényl)-1-méthyléthyl)-phényl)-éthyl)phénoxy)-2-propanol ;
(c) un accélérateur de réaction choisi dans le groupe constitué par un dérivé d'isocyanate bloquée, une amine tertiaire et une amine bloquée ; et
(d) un solvant organique.

2. Composition de revêtement selon la revendication 1, où le polymère est un copolymère d'un ester acrylate ou méthacrylate et d'un composé vinylaromatique.

3. Composition de revêtement selon la revendication 1, où le composé époxyde présente au moins trois groupes époxydes.

4. Composition de revêtement selon la revendication 1, où l'accélérateur de réaction est un dérivé d'isocyanate ou un dérivé d'amine.

5. Composition de revêtement selon la revendication 1, où le solvant organique est choisi dans le groupe constitué par les propylèneglycols, les éthylèneglycols, les acides lactiques, les acides butyriques, les acides acétiques, les acides formiques, les γ-butyrolactones et leurs mélanges.

6. Composition de revêtement selon la revendication 1, où le solvant organique est l'acétate d'éther méthylique du propylèneglycol ou un mélange d'acétate d'éther méthylique du propylène glycol et un ou plusieurs autres solvants organiques.

7. Composition de revêtement selon la revendication 1, où le solvant organique est un mélange d'acétate d'éther méthylique du propylène glycol et d'un solvant organique choisi dans le groupe constitué par les propylèneglycols autres que l'acétate d'éther méthylique du propylène glycol, les éthylèneglycols, les acides lactiques, les acides butyriques, les acides acétiques, les acides formiques, les γ-butyrolactones et leurs mélanges.

8. Utilisation d'une composition de revêtement selon l'une quelconque des revendications 1 à 8 en tant que couche protectrice dans des filtres colorés.
